# EUROPÄISCHE PATENTSCHRIFT

(11) **EP 3 121 434 B1**
(45) Veröffentlichungstag und Bekanntmachung des Hinweises auf die Patenterteilung: **29.08.2018**
(21) Anmeldenummer: 16158973.4
(22) Anmeldetag: 07.03.2016
(51) Int. Cl.: F02M 55/04, F16L 55/04, F16L 55/033

(54) **HOCHDRUCKPUMPE MIT EINEM DÄMPFUNGSELEMENT**
HIGH PRESSURE PUMP WITH A DAMPING ELEMENT
POMPE À HAUTE PRESSION COMPRENANT UN ELEMENT D'AMORTISSEMENT

(30) Priorität: 21.07.2015 DE 102015111803
(43) Veröffentlichungstag der Anmeldung: 25.01.2017
(73) Patentinhaber: Volkswagen AG, 38440 Wolfsburg (DE)
(72) Erfinder: Zlatkov, Dr. Branislav, 38104 Braunschweig (DE); Van Bargen, Dr. Oliver, 38104 Braunschweig (DE); Celovic, Sevket, 38446 Wolfsburg (DE); Laumann, Alfons, 38518 Gifhorn (DE); Erfurt, Jakob, 38442 Wolfsburg (DE); Jagodzinski, Klaus, 38550 Isenbüttel (DE)
(74) Vertreter: Gulde & Partner

(56) Entgegenhaltungen:
- EP-A1- 1 431 570
- DE-A1- 4 341 368
- DE-A1-102005 036 109
- DE-A1-102009 029 219
- US-A1- 2015 017 040

## Beschreibung

Die Erfindung betrifft eine Hochdruckpumpe enthaltend mindestens ein Dämpfungselement in mindestens einem Druckschwankungen aufweisenden fluiddurchströmten Bauraum der Hochdruckpumpe. In Fluiden, die unter Druck einem Arbeitsraum zur Druckerhöhung, in einer Hochdruckpumpe, zugeführt werden, kann es beispielsweise durch Öffnen und Schließen eines Ventils, welches einen Einlass des Fluids unter Druck in den Arbeitsraum reguliert, zu unerwünschten Pulsationen des Fluids kommen.
Die Druckschrift DE 10 2013 220 807 A1 beschreibt eine Pumpeneinheit für eine Hochdruckpumpe mit einem Pumpengehäuse und einem Druckdämpfer. In dem Pumpengehäuse sind eine Druckzuführung und ein Arbeitsraum ausgebildet. Der Arbeitsraum ist über ein Einlassventil mit der Druckzuführung hydraulisch koppelbar. Der Druckdämpfer weist einen fluiddichten Druckausgleichsraum auf, welcher von einer elastisch verformbaren Membran und von einem Dämpfergehäuse begrenzt ist. Im Inneren des Druckausgleichsraumes steht ein Federelement mit der Membran und dem Dämpfergehäuse in Wirkverbindung. Der Druckdämpfer ist derart angeordnet, dass er an einer dem Druckausgleichsraum abgewandten Seite der Membran hydraulisch mit der Druckzuführung gekoppelt ist. Druckdämpfer in dieser Art umfassen eine Membran und ein Federelement, die durch unterschiedliche Stoff-, Form- oder Kraftschlüsse miteinander und mit dem Gehäuse verbunden sind. Solche Ausgestaltungen haben trotz ihrer zumeist guten Funktionsweise den Nachteil, dass sie hörbare Geräusche verursachen und zudem keine perfekte isotrope Wirkung aufweisen. Das Federelement und die Membran bewegen sich nämlich nur entlang einer Achse, das heißt eine isotrope Wirkung ist nicht gegeben, da die Dämpfungswirkung von der Wirkrichtung der auf den Druckdämpfer wirkenden Kraft abhängt.
Ein Material beziehungsweise ein Bauteil hat isotrope Eigenschaften, wenn die jeweilige Eigenschaft in jeder Richtung gemessen gleich ist. Beispielsweise ist die Eigenschaft - Steifigkeit oder Elastizität - isotrop, wenn das Bauteil richtungsunabhängig stets dieselbe Steifigkeit oder Elastizität aufweist.

Das erwähnte Membran-/Federelementdämpfer-System gemäß der Druckschrift DE 10 2013 220 807 A1 weist somit keine isotrope Eigenschaft auf, da sich die Steifigkeit quer zur Achse des Membran-/Federelementdämpfer-Systems von der Steifigkeit längs zur Achse unterscheidet.

Die Druckschrift DE 10 2013 212 557 A1 erläutert ebenfalls eine Lösung zur Verringerung von Druckpulsationen während des Betriebes einer Hochdruckpumpe. Im Betrieb einer als Kolbenpumpe ausgebildeten Hochdruckpumpe erfährt ein Fluidraum wegen des periodisch bewegten Kolbens in einem Triebwerksraum der Hochdruckpumpe, beispielsweise wegen der periodischen Funktion eines die Menge eine Fluids steuernden Mengensteuerventils unerwünschte und vergleichsweise starke Druckpulsationen. Zur Dämpfung der Druckpulsationen (Druckschwankungen) ist in dem Fluidraum niederdruckseitig der Hochdruckpumpe eine Dämpfungseinrichtung angeordnet, die von allen Seiten, also auch in axialer Richtung (bezogen auf die Längsachse der Hochdruckpumpe) mittels einer durch hydraulischen Druck bewirkten Druckkraft beaufschlagt wird, wodurch sich das Volumen der Dämpfungseinrichtung entsprechend verändert, das heißt periodisch verkleinert und vergrößert wird. Wegen der Elastizität der Dämpfungseinrichtung werden die besagten Druckpulsationen verringert. Es erfolgt also eine entsprechende Dämpfung der Druckpulsationen, wodurch der Betrieb der Kolbenpumpe und eines Kraftstoffversorgungssystem, in dem die Kolbenpumpe zum Einsatz kommt, insgesamt verbessert wird, da die mechanischen Belastungen der Komponenten im Niederdruckbereich und entstehende Geräusche im Vergleich zu anderen gattungsgemäßen Kolbenpumpen verringert werden.

Die Dämpfungseinrichtung ist konzentrisch zu einem Kolben der Hochdruckpumpe in dem Gehäuse der Hochdruckpumpe derart angeordnet, dass ein radialer äußerer Abschnitt der Dämpfungseinrichtung an einem radialen inneren Abschnitt des Gehäuses angeordnet ist. Ferner liegt ein radial äußerer Abschnitt der unteren Stirnseite der Dämpfungseinrichtung an einem Dichtungsträger an. Es wird dabei deutlich, dass sich die Form der Dämpfungseinrichtung in nachteiliger Weise nach dem dafür vorgesehenen Einbauraum richtet. Mit anderen Worten ist dieses Dämpfungselement wegen seiner spezifischen an den Einbauraum angepassten Form nur in dieser einen Hochdruckpumpe einsetzbar. Außerdem ist die Dämpfungseinrichtung aus einem elastischen Gehäuse mit einem in dem Gehäuse liegenden elastischen Festkörperelement kompliziert aufgebaut. Bei dieser herkömmlichen Lösung wird bezogen auf die Materialauswahl darauf geachtet, dass zumindest das Gehäuse dauerhaft aus einem kraftstoffresistenten Material ausgebildet ist. Das bedingt, dass im Dauerbetrieb dafür gesorgt werden muss, dass die Dichtigkeit des Gehäuses gegenüber dem im Inneren des Gehäuses angeordneten elastischen Festkörperelement gegeben sein muss. Schließlich ist das in der Druckschrift beschriebene Aufvulkanisieren des Gehäuses auf das Festkörperelement ein aufwändiger Vorgang.

US 2015/0017 040 A zeigt eine Hochdruckpumpe enthaltend mindestens ein Dämpfungselement, welches in einem Bauraum der Hochdruckpumpe angeordnet ist.

DE 10 2005 036 109 A zeigt ein Dämpfungselement, das frei beweglich in einer Leitung angeordnet ist.

Der Erfindung liegt die Aufgabe zugrunde ein Dämpfungselement bereitzustellen, das durch sich verändernden Druck (Druckpulsation) in einem Bauraum einer Hochdruckpumpe hervorgerufene Druckschwankungen dämpft. Ferner wird ein Dämpfungselement gesucht, welches einfach in einer Hochdruckpumpe anordbar und einfach herstellbar ist. Das Dämpfungselement soll gegenüber herkömmlichen Dämpfungseinrichtungen, insbesondere gegenüber herkömmlichen Membran-/Federelementdämpfer-Systemen für eine Reduzierung der Geräuschentwicklung sorgen. Schließlich soll das Dämpfungselement gegenüber den Medien, mit denen es im Gebrauch in Kontakt kommt, beispielsweise Schmierstoffen und/oder Kraftstoffen resistent sein, damit die Langlebigkeit des Dämpfungselementes und des Aggregates, in oder an dem das Dämpfungselement verwendet wird, gewährleistet ist.
Der Begriff Fluid wird in der nachfolgenden Offenbarung der Erfindung als übergeordneter Begriff für Gase und Flüssigkeiten verwendet.

Ausgangspunkt der Erfindung ist eine Hochdruckpumpe enthaltend mindestens ein Dämpfungselement in mindestens einem Druckschwankungen aufweisenden fluiddurchströmten Bauraum der Hochdruckpumpe. Erfindungsgemäß ist vorgesehen, dass das mindestens eine Dämpfungselement frei beweglich in dem mindestens einen Bauraum der Hochdruckpumpe integriert angeordnet ist. Erfindungsgemäss erfolgt durch die frei bewegliche Anordnung des mindestens einen Dämpfungselementes eine Dämpfung der Druckschwankungen des Fluids in dem jeweiligen Bauraum vollständig isotrop.
Mit anderen Worten, die freie Beweglichkeit des Dämpfungselementes hat in vorteilhafter Weise zur Folge, dass das Dämpfungselement in einer Flüssigkeit als Fluid frei schwimmt oder einem Gas als Fluid frei schwebt, so dass die schwankende Druckkraft stets aus allen Wirkrichtungen frei auf das isotrope Eigenschaften aufweisende Dämpfungselement einwirken kann.
Da sich das Dämpfungselement in dem Fluid bewegen kann, kommt es in vorteilhafter Weise zu einer freien Positionierung des isotropen Dämpfungselementes in Abhängigkeit von der Wirkrichtung der Druckkraft der Druckschwankungen. Dadurch kommt es stets zu einer Dämpfungswirkung, worin ein wesentlicher Vorteil der Erfindung gesehen wird. In vorteilhafter Weise wird nur ein geringer Montageaufwand benötigt, da das Dämpfungselement lediglich in den dafür vorgesehenen Bauraum eingebracht werden muss. Außerdem weist das mindestens eine Dämpfungselement in vorteilhafter Weise eine frei wählbare Form auf, die sich nicht nach der Form des Bauraumes richtet.

Bevorzugt ist vorgesehen, dass der mindestens eine in die Hochdruckpumpe integrierte Bauraum ein Arbeitsraum (Fluidraum) der Hochdruckpumpe ist. Insbesondere bietet sich in vorteilhafter Weise ein Druckausgleichsraum oder ein Triebwerksraum an, der bei einigen herkömmlichen Hochdruckpumpen bereits zur Verfügung steht.
Der Druckausgleichsraum oder der Triebwerksraum bieten sich somit in vorteilhafter Weise als Bauräume für mindestens eines der Dämpfungselemente an, wodurch kein separater Bauraum zur Dämpfung der Druckschwankungen geschaffen werden muss.

Verschiedene Ausführungsformen der Dämpfungselemente sind im Beschreibungsteil näher erläutert.
Bevorzugt ist vorgesehen, dass das Dämpfungselement aus einem Material ausgebildet ist, welches gegenüber der chemischen Zusammensetzung des Fluids, insbesondere gegenüber Schmier- und/oder Kraftstoffen resistent ist.
Das Dämpfungselement ist aus einem elastischen Material ausgebildet und reagiert auf Druckbeanspruchung mit einer vorgebbaren reversiblen Volumenänderung.
Als elastisches Material des Dämpfungselementes ist ein Elastomer oder ein aufgeschäumtes Elastomer oder ein thermoplastisches Elastomer oder ein aufgeschäumtes thermoplastisches Elastomer vorgesehen, das gegenüber einem als Fluid zum Einsatz kommenden Schmierstoff und/oder Benzin und/oder Dieselkraftstoff resistent ist. Erfindungsgemäss ist das Dämpfungselement aus dem ausgewählten Material mehrlagig, wobei die Lagen eines mehrlagigen Dämpfungselementes aus nur einem Material unterschiedlicher Härte oder aus verschiedenen Materialien mit unterschiedlicher Härte ausgebildet ist/sind. Auch durch diese Lösung ist es in vorteilhafter Weise auf andere Weise möglich für die jeweils ausgewählten Materialien, je nach den Randbedingungen ein an die Randbedingungen angepasstes optimiertes Dämpfungselement zu schaffen.

In einer optionalen Ausgestaltung ist es bevorzugt vorgesehen, dass das mehrlagige Dämpfungselement beschichtet ist. Die Beschichtung wirkt in vorteilhafter Weise als eine zusätzliche Schutzbarriere vor ungünstigen materialzerstörenden chemischen Eigenschaften des Fluids gegenüber dem ausgewählten Material des Dämpfungselementes.

Erfindungsgemäß ist bevorzugt vorgesehen, dass die Hochdruckpumpe in einem Kraftstoffversorgungssystem eines Kraftfahrzeugs angeordnet ist.
Erfindungsgemäß ist ferner bevorzugt vorgesehen, dass das Kraftstoffversorgungssystem eines Kraftfahrzeugs mit der Hochdruckpumpe ausgestattet ist. Die verschiedenen in dieser Anmeldung genannten Ausführungsformen der Erfindung sind, sofern im Einzelfall nicht anders ausgeführt, mit Vorteil miteinander kombinierbar.
In der nachfolgenden Beschreibung wird ein hochdämpfendes Element vorgestellt, nachfolgend Dämpfungselement genannt, welches in einer fluiddurchströmten Pumpe zum Einsatz kommt.

Die Anmelderin setzt das Dämpfungselement in einer Hochdruckpumpe eines Kraftstoffversorgungssystems einer Brennkraftmaschine ein.

### Herstellungsverfahren:

Zur Herstellung eines der Dämpfungselemente werden verschiedene Verfahren vorgeschlagen.
Es wird vorgeschlagen, die Dämpfungselemente im Spritzgussverfahren herzustellen.
In einer anderen Ausgestaltung erhält man ein Dämpfungselement durch Extrudieren und Vulkanisieren.
Für bestimmte Anwendungsfälle wird ein Aufschäumen oder Gießen des Dämpfungselementes durchgeführt.
Außerdem wird als weiteres Herstellungsverfahren das Formpressen inklusive Vulkanisieren vorgeschlagen.

### Materialauswahl:

Hinsichtlich der Materialauswahl wird vorgeschlagen, die Dämpfungselemente aus einem Polymer oder einer Polymermatrix auszubilden, wobei das Dämpfungselement aus einem Polymer oder einer Polymermatrix auf der Basis eines mediumverträglichen Elastomers oder eines mediumverträglichen thermoplastischen Elastomers ausgebildet ist.

Insbesondere ist vorgesehen, dass das Dämpfungselement in einem Kraftstoff, insbesondere in Benzin und in Diesel eingesetzt wird, so dass bei der Auswahl der Materialen sichergestellt wird, dass eine entsprechende Verträglichkeit der Materialen vorliegt.

Dabei ist vorgesehen, dass das Dämpfungselement an sich aus einem kraftstoffverträglichen Material hergestellt ist, oder zumindest eine kraftstoffverträgliche Oberflächenbeschichtung aufweist.

In Abhängigkeit des Mediums, in dem das Dämpfungselement zum Einsatz kommt, sind in der Praxis auch die Druckerhöhungen der Druckpulsationen unterschiedlich und müssen dementsprechend bei der Materialauswahl des Dämpfungselementes beachtet werden.

Je nach Einsatz im Medium Diesel oder Benzin und den jeweils im Kraftstoffversorgungssystem vorherrschenden Druckhöhen der Druckpulsationen wird die Materialauswahl entsprechend unterschiedlich vorgenommen.

Als Elastomere werden insbesondere vorgeschlagen: Fluorkautschuk (FKM), Fluorsilikon (FVMQ), Polyurethan-Kautschuk (EU/AU), Hydrierter Nitril-Kautschuk (HNBR), Nitrilkautschuk (NBR) und Epichlorhydin-Kautschuk (CO/ECO).

Als thermoplastische Elastomere werden insbesondere vorgeschlagen: Styrol-Blockcopolymere (TPS), thermoplastische Polyesterelastomere (TPC), thermoplastische Elastomere auf Olefinbasis (TPO), vernetzte thermoplastische Elastomere auf Olefinbasis (TPV) sowie Copolyester.

Ferner wird vorgeschlagen, dass in Abhängigkeit von den Anforderungen auch Schaummaterial der oben genannten Polymertypen, insbesondere ein Elastomer oder ein thermoplastisches Elastomer eingesetzt wird.

### Oberflächenbeschaffenheit:

In Abhängigkeit von den Anforderungen an die Oberflächenbeschaffenheit der Dämpfungselemente wird ferner vorgeschlagen, die Dämpfungselemente durch Lackieren, Tauchen, Spritzen oder durch Bedampfen zu beschichten.

Wie erläutert ist einerseits in einer ersten Ausgestaltung vorgesehen, dass das Dämpfungselement an sich aus einem kraftstoffverträglichen Material hergestellt ist.

In einer zweiten Ausgestaltung ist vorgesehen, dass das Dämpfungselement an sich nicht aus einem kraftstoffverträglichen Material besteht. Zur Sicherung der Kraftstoffverträglichkeit ist dann mindestens eine der genannten kraftstoffverträglichen Oberflächenbeschichtungen vorgesehen.

In einer anderen Ausgestaltung ist das Dämpfungselement an sich aus einem kraftstoffverträglichen Material hergestellt und die Oberfläche des Dämpfungselementes ist zusätzlich aus einem ebenfalls kraftstoffverträglichen Material hergestellt, wodurch bei der Materialauswahl des Kernes des Dämpfungselementes mehr auf die elastischen Eigenschaften Wert gelegt wird, während die Materialauswahl der gegenüber dem Kern des Dämpfungselementes dünneren Oberflächenbeschichtung mehr von der Kraftstoffverträglichkeit bestimmt ist.

Eine spezielle Materialauswahl durch poröse Ausführungen des Dämpfungselementes aus einem Schaummaterial sorgt dafür, dass der elastische Verformungsgrad in vorteilhafter Weise besser beeinflusst werden kann.

Bei Ausbildung der Dämpfungselemente aus einem Schaummaterial ist der elastische Verformungsgrad größer als bei Dämpfungselementen, die nicht aus einem Schaummaterial ausgebildet sind. Dadurch sichern die Dämpfungselemente bei einem Druckanstieg durch ihre elastische Verformung, dass nur ein maximaler Druck in bestimmten Grenzen auftreten kann, so dass die Hochdruckpumpe beziehungsweise zuführende Leitung zur Hochdruckpumpe vor Beschädigungen geschützt sind.

### Funktion:

Jedes nach den genannten Gesichtspunkten, wie Herstellungsverfahren und Material und Oberflächenbeschaffenheit, hergestellte Dämpfungselement ist derart ausgestaltet, dass das in dem jeweilige Bauraum frei beweglich angeordnete isotrope Dämpfungselement bei unterschiedlichen Druckhöhen der Druckpulsationen und bei unterschiedlich auftretenden Frequenzen unabhängig von der Wirkrichtung der Druckkraft der Druckpulsationen stets eine Dämpfungswirkung erzielt.

Durch die Dämpfungswirkung wird der Effekt erreicht, dass die Geräuschentwicklung einer Hochdruckpumpe, minimiert wird und die Gehäuseteile und die in der Hochdruckpumpe angeordneten Komponenten einer geringeren dynamischen Belastung unterliegen, da die ansonsten auftretenden Druckpulsationen reduziert sind.
Das mindestens eine Dämpfungselement schwächt die sich gegebenenfalls auch aus verschiedenen Quellen herrührenden überlagernden Druckerhöhungen/Druckpulsationen ab und kann somit ferner auch als Sicherheitselement angesehen werden.
Bei einer auftretenden Drucksteigerung (Druckspitze) reagiert das Dämpfungselement mit einer Volumenänderung.
Das bei einem Auslegungsdruck vorhandene Volumen des Dämpfungselementes verringert sich bei einem Druckanstieg, wodurch der auftretende Maximaldruck (Druckspitze) im Gehäuse sinkt, da das Volumen des Dämpfungselementes zum Zeitpunkt der auftretenden Druckspitze gegenüber dem Auslegungsvolumen zum Zeitpunkt des herrschenden Auslegungsdruckes verringert wird.

Die Dämpfungselemente erfüllen zusammengefasst mehrere Funktionen. Es kommt zu einer Dämpfung einer Druckpulsation und auftretende Druckspitzen werden ausgeglichen. Der Druckausgleich findet durch reversible elastische Verformung der Dämpfungselemente statt.
Insbesondere durch poröse Ausführungen der Dämpfungselemente aus einem Schaummaterial kann der elastische Verformungsgrad beeinflusst werden.
Bei Ausbildung der Dämpfungselemente aus einem Schaummaterial ist der elastische Verformungsgrad größer als bei Dämpfungselementen, die nicht aus einem Schaummaterial ausgebildet sind.

Insgesamt sichern die Dämpfungselemente bei einem Druckanstieg durch ihre elastische Verformung, dass nur ein maximaler Druck in bestimmten Grenzen auftreten kann, so dass das jeweilige Aggregat vor Beschädigungen geschützt ist.

### Anordnung:

Es ist erfindungsgemäß vorgesehen, dass das/die Dämpfungselement/e in einem dafür vorgesehenen Bauraum im Medium (Fluid) freibeweglich anzuordnen ist/sind, so dass eine gleichmäßige Aufnahme der Druckkräfte der Druckpulsationen in dem isotropen Dämpfungselement wirkrichtungsunabhängig bewirkt wird. Eine vollständige isotrope Wirkung wird dadurch erzielt, dass die Dämpfungselemente frei schwebend, mit anderen Worten ohne Verbindung zu anderen Komponenten oder Bauteilen in dem dafür ausgewählten Bauraum angeordnet sind, so dass der Druck von allen Seiten gleichmäßig an dem Dämpfungselement angreifen kann. Die isotropen Dämpfungselemente sind dementsprechend frei beweglich innerhalb des gewählten Bauraumes angeordnet und können durch ihre freie Beweglichkeit innerhalb des Bauraumes aus den Druckpulsationen resultierende Kräfte aus allen Wirkrichtungen aufnehmen.

Als Bauräume werden einerseits in die Hochdruckpumpe integrierte Bauräume oder nicht integrierte sogenannte externe Bauräume vorgeschlagen.
Ferner wird danach unterschieden, ob das Dämpfungselement in einen in dem Aggregat zur Verfügung stehenden Bauraum eingebracht wird, oder als Dämpfungsvorrichtung mit einem eigenen Gehäuse ausgebildet ist, in dem mindestens ein Dämpfungselement angeordnet ist. Wobei die letzten Varianten mit der Dämpfungsvorrichtung nicht Teil der Erfindung sind.

Eine Dämpfungsvorrichtung kann dann an einer dafür vorgesehenen Schnittstelle an dem Aggregat verbaut werden.

### Einige Varianten am Beispiel einer Hochdruckpumpe:

### Integrierte Varianten:

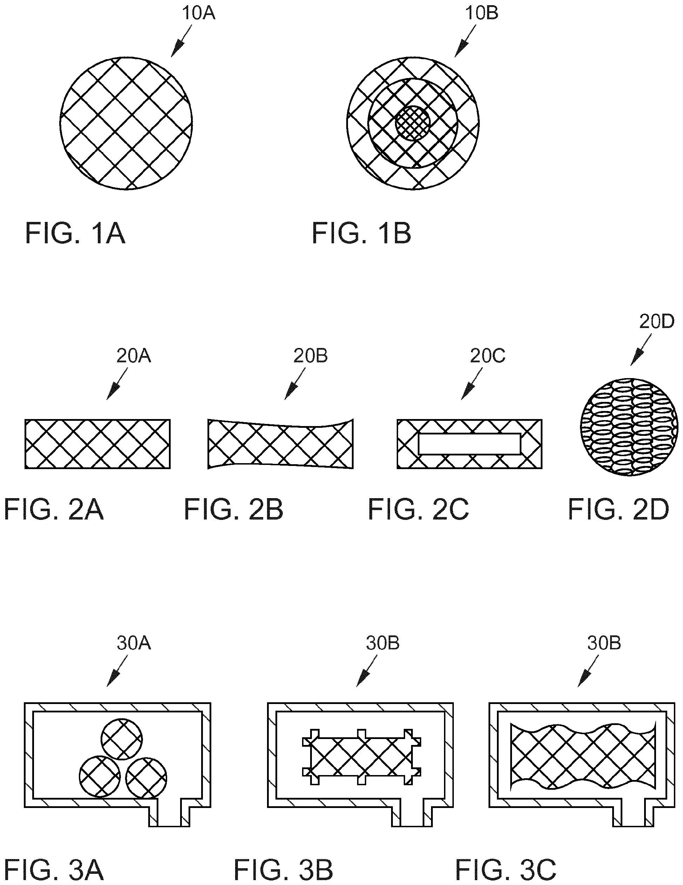

A: Das Dämpfungselement ist in einem Druckschwankungen aufweisenden vorhandenen oder geschaffenen Bauraum einer Hochdruckpumpe integriert (siehe Figuren 1A, 1B, 2A, 2B, 2C, 2D).
   Als Bauraum wird allgemein ein Arbeitsraum und bevorzugt der sogenannte Druckausgleichsraum einer Hochdruckpumpe im Niederdruckbereich der Hochdruckpumpe vorgeschlagen. Dort werden üblicherweise Druckschwankungen im Niederdrucksystem eines Kraftstoffversorgungssystems ausgeglichen. Dieser Druckausgleich kann weiter verbessert werden, wenn im Druckausgleichsraum mindestens ein Dämpfungselement angeordnet ist.
B: Das Dämpfungselement ist in einem Druckschwankungen aufweisenden vorhandenen oder geschaffenen Bauraum einer Zuleitung und/oder Bypassleitung zu einer Hochdruckpumpe integriert (siehe Figuren 1A, 1B, 2A, 2B, 2C, 2D).
   Als Bauraum wird eine Zuleitung zu der Hochdruckpumpe und/oder eine separat in der Zuleitung zu der Hochdruckpumpe angeordnete Bypassleitung vorgeschlagen, in der/denen bereits die zu reduzierenden Druckschwankungen auftreten. Bei dieser Variante wird die Wandung der Zuleitung/Bypassleitung als Bauraum genutzt. Die Form der Dämpfungselemente wird derart gewählt, dass sich die Dämpfungselemente in dem dafür vorgesehenen Bauraum frei bewegen können. Es wird dafür gesorgt, dass das Dämpfungselement nicht vom Fluid mitgenommen wird. Außerdem sind die Dämpfungselemente derart angeordnet und ausgebildet, dass der Durchfluss des Fluids in der Zuleitung/Bypassleitung nicht behindert wird.

### Nicht integrierte Varianten:

Die folgenden Varianten sind nicht Teil der Erfindung.
C: Dämpfungsvorrichtung in einem eigenen Dämpfergehäuse zum Anbau an einer dafür vorgesehenen Schnittstelle des Gehäuses der Hochdruckpumpe, an der Druckschwankungen im Gehäuse der Hochdruckpumpe reduzierbar sind (siehe Figuren 3A, 3B, 3C).
   Es ist vorgesehen, die Dämpfungsvorrichtung an einer dafür vorgesehen Schnittstelle an dem Gehäuse einer Hochdruckpumpe anzuordnen. Die Form des Dämpfungselementes wird derart gewählt, dass sich das Dämpfungselement in dem dafür vorgesehenen Bauraum innerhalb des Dämpfergehäuses frei bewegen kann. Es wird ferner dafür gesorgt, dass das Dämpfungselement innerhalb des Dämpfergehäuses nicht vom Fluid mitgenommen wird. Außerdem ist das Dämpfungselement derart in dem Dämpfergehäuse angeordnet und ausgebildet, dass der Durchfluss des Fluids durch das Dämpfergehäuse nicht behindert wird.
D: Dämpfungsvorrichtung in einem eigenen Gehäuse zum Einbau in einer dafür vorgesehenen Schnittstelle einer Zuleitung und/oder Bypassleitung, an der Druckschwankungen der Hochdruckpumpe bereits in der Zuleitung und/oder Bypassleitung zu der Hochdruckpumpe reduzierbar sind (siehe Figuren 3A, 3B, 3C).
   Es ist vorgesehen, die Dämpfungsvorrichtung an einer dafür vorgesehenen Schnittstelle in einer dafür vorgesehenen Schnittstelle einer Zuleitung und/oder Bypassleitung zu der Hochdruckpumpe anzuordnen. Die Form des Dämpfungselementes wird derart gewählt, dass sich das Dämpfungselement in dem dafür vorgesehenen Bauraum innerhalb des Dämpfergehäuses frei bewegen kann.
   Es wird ferner dafür gesorgt, dass das Dämpfungselement innerhalb des Dämpfergehäuses nicht vom Fluid mitgenommen wird. Außerdem ist das Dämpfungselement derart in dem Dämpfergehäuse angeordnet und ausgebildet, dass der Durchfluss des Fluids durch das Dämpfergehäuse nicht behindert wird.

Durch die unterschiedlichen Anordnungsmöglichkeiten, nämlich entweder integriert (Varianten A und B) in einer Pumpeneinheit oder als separater Teil als Dämpfungsvorrichtung (Varianten C und D) an einer Pumpeneinheit beziehungsweise in einer Zuleitung und/oder Bypassleitung, ist sichergestellt, dass flexibel auf verschiedene Ausführungen von Pumpeneinheiten und/oder Einbaumöglichkeiten der Pumpeneinheiten reagiert werden kann.

### Aufbau der Dämpfungselemente:

Ein weiterer Vorteil besteht in der einfachen Konstruktion beziehungsweise dem Aufbau der Dämpfungselemente beziehungsweise der Dämpfungsvorrichtung, wobei ferner das Gewicht der Pumpeneinheit reduziert wird, da die Dämpfungselemente ein geringes Gewicht aufweisen.

Erfindungsgemäß ist vorgesehen, dass das Dämpfungselement mehrlagig aufgebaut ist. Insbesondere durch den mehrlagigen Aufbau wird in vorteilhafter Weise erreicht, dass das Dämpfungselement einen breiten Bereich von Anforderungen abdeckt, denen das Dämpfungselement während des Betriebes unterliegt. Die einzelnen Lagen oder Schichten eines mehrlagigen oder mehrschichtigen aufgebauten Dämpfungselementes weisen dabei unterschiedliche Härten und/oder unterschiedliche Materialbeschaffenheiten auf.
Je nach den Anforderungen werden die einzelnen Lagen oder Schichten je nach der gewählten Art der Herstellung in Bezug auf die Materialbeschaffenheit und auf die Härte ausgewählt und aufeinander abgestimmt.
Durch die vorgehenden Erläuterungen wird bereits deutlich, dass es eine Vielzahl von Ausführungen gibt, die nicht vollumfassend erläutert werden können. Die verschiedenen in dieser Anmeldung genannten Ausführungsformen der Erfindung sind, sofern im Einzelfall nicht anders ausgeführt, mit Vorteil miteinander kombinierbar.
Die Erfindung wird nachfolgend in einer nicht abschließenden Anzahl von Ausführungsbeispielen anhand der zugehörigen Zeichnungen noch näher erläutert. Es zeigen:
- Figur 1A: einen schematischen Querschnitt durch ein einlagiges kugelförmiges Dämpfungselement, das nicht Teil der Erfindung ist;

- Figur 1B: einen schematischen Querschnitt eines mehrlagen kugelförmigen Dämpfungselementes;
- Figur 2A: einen schematischen Querschnitt durch ein einlagiges rechteckiges Dämpfungselement mit geraden Mantelflächen, das nicht Teil der Erfindung ist;
- Figur 2B: einen schematischen Querschnitt eines einlagigen rechteckigen Dämpfungselementes mit ungeraden Mantelflächen, das nicht Teil der Erfindung ist;
- Figur 2C: einen schematischen Querschnitt durch ein einlagiges Dämpfungselement mit einem Hohlraum, das nicht Teil der Erfindung ist;
- Figur 2D: einen schematischen Querschnitt eines einlagigen Dämpfungselementes, als Kugelform aufgeschäumt, das nicht Teil der Erfindung ist;

- Figur 3A: einen schematischen Querschnitt durch eine Dämpfervorrichtung mit einem Gehäuse, in dem einlagige kugelförmige Dämpfungselemente gemäß Figur 1A angeordnet sind; die Dämpfervorrichtung ist nicht Teil der Erfindung
- Figur 3B: eine Dämpfervorrichtung mit einem Gehäuse, in dem ein im Wesentlichen rechteckiges Dämpfungselement gemäß Figur 2B angeordnet ist, welches von den Mantelflächen des Rechteckes abstehende Stege aufweist; die Dämpfervorrichtung ist nicht Teil der Erfindung und
- Figur 3C: eine weitere Dämpfervorrichtung mit einem Gehäuse, in dem ein rechteckiges aufgeschäumtes Dämpfungselement angeordnet ist. Die Dämpfervorrichtung ist nicht Teil der Erfindung.
Es versteht sich, dass die Auslegung eines Dämpfungselementes vielen variablen Randbedingungen unterliegt, wie beispielsweise der Art des Fluids (Benzin oder Dieselkraftstoff) der Druckhöhe des Fluids, der zu erwartenden Druckspitze im Bereich der zu reduzierenden Druckschwankungen, der Frequenz der Druckschwankungen und letztlich, der von dem Dämpfungselement gewünschten Dämpfungsrate.
Nachfolgend wird von einem Kraftstoffversorgungssystem ausgegangen, welches beispielsweise mittels einer Vorförderpumpe Fluid, insbesondere Kraftstoff im Niederdruckbereich im Druckbereich zwischen 3 bis 6 bar zu einer Hochdruckpumpe, insbesondere zu einer kraftstoffgeschmierten Hochdruckpumpe liefert. Durch die Vorförderpumpe entstehen in einem niederdruckseitigen Pumpenarbeitsraum der Hochdruckpumpe und/oder in der Zuleitung zu der Hochdruckpumpe die zu reduzierenden Druckschwankungen.
Im niederdruckseitigen Pumpenarbeitsraum der Hochdruckpumpe entstehen durch die oszillierende Bewegung des Kolbens der Hochdruckpumpe unabhängig von einer Fluid zuführenden Vorförderpumpe ebenfalls Druckschwankungen, die ebenfalls reduziert werden sollen.
Als Druckspitze wird somit für die Auslegung der nachfolgend erläuterten Dämpfungselemente ein maximaler Auslegungsdruck von maximal 6 bar angenommen.
Die nachfolgend erläuterten Ausführungsformen können in die Hochdruckpumpe integriert werden. Das Dämpfungselement 10B, wird als integrierte Variante A in einem Druckschwankungen aufweisenden vorhandenen oder geschaffenen Bauraum direkt in der Hochdruckpumpe integriert (siehe Figur 1B). In der anderen Variante wird das Dämpfungselement 10B in einem Druckschwankungen aufweisenden vorhandenen oder geschaffenen Bauraum einer Zuleitung und/oder Bypassleitung zu einer Hochdruckpumpe integriert (siehe Figur 1B). Die Figur 1A zeigt in einem schematischen Querschnitt ein einlagiges kugelförmiges Dämpfungselement 10A. Dieses Beispiel ist nicht Teil der Erfindung. Das Dämpfungselement 10A ist beispielsweise aus einem Nitrilkautschuk (NBR) ausgebildet und weist in Abhängigkeit von der Frequenz der Druckschwankungen und in Abhängigkeit von der Druckhöhe des Fluids und in Abhängigkeit der erwarteten Druckspitze eine Härte beispielsweise zwischen 30 bis 60 Shore auf. Das genannte Material Nitrilkautschuk (NBR) weist gegenüber Benzin sehr gute Resistenzeigenschaften auf. Der Durchmesser des kugelförmigen Dämpfungselementes 10A beträgt beispielsweise zwischen 5 bis 15 mm.
Bevorzugt wird das kugelförmige Dämpfungselement 10A mittels Spritzgießen hergestellt oder es wird eine Gummimischung gepresst und anschließend vulkanisiert. In vorteilhafter Weise ist das kugelförmige Dämpfungselement 10A einfach herstellbar und leicht reproduzierbar. Es weist außerdem eine gute Homogenität auf, so dass elastische homogene Eigenschaften gegeben sind.
Ein kugelförmiges Dämpfungselement 10A kann leicht in einem Arbeitsraum angeordnet werden, wobei im Betrieb in vorteilhafter Weise sichergestellt ist, dass Öffnungen, in denen ein Fluid zu- oder abfließt, durch die Kugelform des Dämpfungselementes 10A auch nach einer elastischen Verformung nicht vollständig verschlossen werden.
Die Figur 1B zeigt in einem schematischen Querschnitt ein mehrlagiges einlagiges kugelförmiges Dämpfungselement 10B.
Die erste, innere Lage ist aus einem Nitrilkautschuk (NBR) mit einer Härte zwischen beispielsweise 50 bis 60 Shore ausgebildet. Die zweite, mittlere Lage ist aus Nitrilkautschuk (NBR) mit einer Härte beispielsweise zwischen 40 bis 50 Shore ausgebildet. Als dritte, äußere Lage wird beispielsweise ein Fluorsilikon (FVMQ) mit einer Härte beispielsweise zwischen 30 bis 40 Shore verwendet. Die Auswahl der Härte innerhalb der genannten Bereiche erfolgt in Abhängigkeit von der Frequenz der Druckschwankungen und in Abhängigkeit von der Druckhöhe des Fluids beziehungsweise der erwarteten Druckspitze. Wie erwähnt weist das genannte Material Nitrilkautschuk (NBR) gegenüber Benzin sehr gute Resistenzeigenschaften auf.

Es hat sich herausgestellt, dass die Verwendung von Fluorsilikon (FVMQ) als dritte, äußere Lage eine noch bessere Resistenz des Dämpfungselementes 10B aufweist. Fluorsilikon (FVMQ) ist bei Verwendung von Benzin als Kraftstoff gegenüber Nitrilkautschuk (NBR) resistenter, jedoch teurer, wodurch zumeist Nitrilkautschuk (NBR) verwendet wird.

Es versteht sich entsprechend, dass Fluorsilikon (FVMQ) auch als zweite, äußere Lage auf einer ersten, inneren Lage ist aus einem Nitrilkautschuk (NBR) zum Einsatz kommen kann.

Ferner wird darauf verwiesen, dass ein zwei- oder dreilagiges Dämpfungselement 10B aus mehreren Lagen Nitrilkautschuk (NBR) mit den oben genannten Härten ausgebildet sein kann.

Insgesamt haben mehrlagige Dämpfungselemente 10B den Vorteil, dass geringere Druckspitzen bereits in der elastischeren dritten, äußeren Lage mit der Härte beispielsweise zwischen 30 bis 40 Shore aufgenommen werden können.

Beim Auftreten von höheren Druckspitzen erfolgt auch eine elastische Verformung der zweiten, mittleren Lage, da die dritte, äußere Lage nicht ausreicht, um die Druckspitzen zu dämpfen. Entsprechend weist die zweite, mittlere Lage eine höhere Härte von beispielsweise 40 bis 50 Shore auf als die dritte, äußere Lage.

Schließlich wird die erste, innere Lage mit einer noch höheren Härte im Bereich von beispielsweise 50 bis 60 Shore ausgebildet, wodurch sichergestellt ist, dass beim Auftreten einer maximalen Druckspitze eine ausreichende elastischen Verformbarkeit aller Lagen des Dämpfungselementes 10B vorliegt.

Der dreilagige Aufbau hat gegenüber einem zweilagigen Aufbau den Vorteil, dass eine Dämpfungswirkung in drei Härtestufen möglich ist, wobei ein zweilagiges Dämpfungselement nur in zwei Härtestufen ausbildbar ist.

Es versteht sich in diesem Zusammenhang, dass ein mehrlagiges Dämpfungselement auch mehr als drei Lagen aufweisen kann, wodurch noch mehrere Härtestufen innerhalb eines einzigen Dämpfungselementes realisierbar sind.

Der Durchmesser des dargestellten dreischichtigen Dämpfungselementes 10B gemäß der Figur 1B beträgt beispielsweise zwischen 5 bis 15 mm. Der Durchmesser der einzelnen Lagen ist variabel und variiert beispielsweise zwischen 3 und 7 mm.

Bevorzugt wird das Dämpfungselement mittels Spritzgießen hergestellt.
Dabei ist vorgesehen, dass zunächst der beispielsweise kugelförmige Kern als erste, innere Lage gespritzt wird. Anschließend wird die zweite, mittlere Lage kugelförmig um die erste, innere Lage gespritzt, wonach schließlich die dritte, äußere Lage kugelförmig auf die zweite, mittlere Lage gespritzt wird. Zuletzt wird eine entsprechende Vulkanisierung durchgeführt. In einer anderen Ausgestaltung wird nach Herstellung jeder Lage eine entsprechende Vulkanisierung durchgeführt. Zwischen zwei Lagen wird in bevorzugter Ausgestaltung (optional) ein Primer als Haftvermittler verwendet. Im Vergleich zu dem Dämpfungselement 10A gemäß Figur 1A ist die Herstellung eines mehrlagigen Dämpfungselementes schwieriger und die Reproduzierbarkeit nur mit erhöhtem Aufwand zu erreichen.
Im Vergleich zu den aus dem Stand der Technik bekannten Dämpfungselementen gelten jedoch die zu dem in Figur 1A dargestellten Dämpfungselement 10A genannten Vorteile auch für das in Figur 1B dargestellte Dämpfungselement 10B.
Vervollständigend wird noch darauf verwiesen, dass ein mehrlagiges Dämpfungselement einen nichtelastischen Kern in einer vorgebbaren Form aufweisen kann, der mit mindestens einer elastischen Lage als Dämpfungslage versehen ist, die aus einem der genannten Materialien besteht.
Die Figur 2B zeigt einen schematischen Querschnitt durch ein einlagiges rechteckiges Dämpfungselement 20A mit geraden Mantelflächen. Dieses Beispiel ist nicht Teil der Erfindung.

Das Dämpfungselement 20A ist beispielsweise aus einem Nitrilkautschuk (NBR) oder einem Polyurethan-Kautschuk (EU/AU) ausgebildet und weist in Abhängigkeit von der Frequenz der Druckschwankungen und in Abhängigkeit von der Druckhöhe des Fluids und in Abhängigkeit der erwarteten Druckspitze eine Härte zwischen beispielsweise 30 bis 60 Shore auf.
Das genannte Material Nitrilkautschuk (NBR) weist gegenüber Benzin sehr gute Resistenzeigenschaften auf. Bevorzugt wird das rechteckige Dämpfungselement 10A mittels Spritzgießen hergestellt oder es wird eine Gummimischung gepresst und anschließend vulkanisiert. Alternativ kann das Dämpfungselement auch durch Extrudieren und Vulkanisieren und Schneiden oder Extrudieren und Schneiden und Vulkanisieren hergestellt werden.
Ein Vorteil gegenüber den kugelförmigen Dämpfungselementen 10A, 10B gemäß den Figuren 1A und 1B besteht in der einfachen Konfektionierbarkeit. In vorteilhafter Weise können endlose rechteckige Profile hergestellt werden, die dann nach Maß (Lange/Breite/Höhe beispielsweise 15mm/ 10mm/5mm) geschnitten werden können.
In vorteilhafter Weise ist das rechteckige Dämpfungselement 20A einfach herstellbar und leicht reproduzierbar. Es weist außerdem eine gute Homogenität auf, so dass elastische homogene Dämpfungseigenschaften gegeben sind. Ein rechteckiges Dämpfungselement 20A kann leicht in einem Arbeitsraum angeordnet werden, wobei im Betrieb in vorteilhafter Weise sichergestellt ist, dass Öffnungen, in denen ein Fluid zu- oder abfließt, durch die Rechteckform des Dämpfungselementes 20A auch nach einer elastischen Verformung nicht vollständig verschlossen werden. Dazu weist das rechteckige Dämpfungselement 20A Abmessungen auf, die sicherstellen, dass sich das Dämpfungselement in dem Arbeitsraum zwar frei bewegen kann, jedoch sind die Abmessungen derart gewählt, dass sich die Lage innerhalb des Arbeitsraumes nur gering ändern können, so dass Zuflussöffnungen und/oder Abflussöffnungen stets frei gehalten werden, um den Durchfluss des Fluids nicht zu behindern.
Die Figur 2B zeigt einen schematischen Querschnitt durch ein einlagiges rechteckiges Dämpfungselement 20B mit ungeraden Mantelflächen.
Die dargestellte Form des Dämpfungselementes 20B soll verdeutlichen, dass von der rechteckigen Form abweichende Formen möglich sind. Diese abweichende Form wird durch den zur Verfügung stehenden Arbeitsraum, in dem das Dämpfungselement 20B angeordnet werden soll, bestimmt. Ansonsten gilt die Beschreibung zu dem Dämpfungselement 20A gemäß Figur 2A.
Die Figur 2C zeigt einen schematischen Querschnitt durch ein einlagiges rechteckiges Dämpfungselement 20C mit geraden Mantelflächen und einem von den Wandungen des Dämpfungselementes 20C umschlossenen Hohlraum. Dieses Beispiel ist nicht Teil der Erfindung.

Der geschlossene Hohlraum kann kugelförmig oder wie dargestellt rechteckig oder in einer beliebigen Form ausgebildet sein. Für das Dämpfungselement 20C gemäß Figur 2C gilt die Beschreibung zu dem Dämpfungselement 20A gemäß Figur 2A mit dem Unterschied, dass der geschlossene Hohlraum des Dämpfungselementes 20C eine Art Dämpfungsreserve ist, die von der Kompressibilität des sich in dem Hohlraum befindenden Mediums abhängt.
Als bevorzugtes Herstellungsverfahren wird das Spritzblasformen oder das Schmelzkernverfahren vorgeschlagen. Mittels dieser Verfahren sind Bauteile mit Hohlräumen einfach herzustellen. Es versteht sich, dass sich ein solches Dämpfungselement 20C durch Spritzgießen aus zwei Teilen herstellen lässt, die entsprechend zu einem Bauteil zusammen vulkanisiert werden, wobei optional ein Haftvermittler als Zwischenschicht ausgebildet wird.
Die Figur 2D zeigt in einem schematischen Querschnitt ein einlagig kugelförmig aufgeschäumtes Dämpfungselement 20D. Dieses Beispiel ist nicht Teil der Erfindung.

Es hat sich herausgestellt, dass ein aufgeschäumtes Dämpfungselement 20D sehr gut geeignet ist, um Druckschwankungen zu dämpfen. In vorteilhafter Weise können sich aufgeschäumte Dämpfungselemente 20D stark elastisch verformen, so dass eine große Volumenänderung des Dämpfungselementes 20D realisierbar ist. Dadurch ist gewährleistet, dass bei Druckschwankungen, insbesondere bei großen Druckschwankungen, durch die entsprechend große Volumenänderung ein sehr gutes Dämpfungsverhalten bewirkt wird.
Außerdem hat sich herausgestellt, dass ein aufgeschäumtes Dämpfungselement 20D in vorteilhafter Weise auftretende Geräusche reduziert. Mit anderen Worten schluckt das aufgeschäumte Dämpfungselement 20D auftretende Geräusche durch in dem Schaum angeordnete Poren, vergleichbar mit einem Schalldämpfungselement.
Als Material wird zur Herstellung des Dämpfungselementes beispielsweise Polyurethan (PU) verwendet, wobei unter Berücksichtigung der oben genannten Randbedingungen eine Härte in dem Bereich von beispielsweise 35 bis 55 Shore gewählt wird, um die genannten technischen Eigenschaften des Dämpfungselementes 20D zu bewirken. Polyurethan (PU) ist zudem weitestgehend gegenüber Benzin als Kraftstoff resistent und ist somit für die genannte Verwendung in einer beispielsweise mit Kraftstoff (Benzin) geschmierten Hochdruckpumpe geeignet.
In vorteilhafter Weise ist das aufgeschäumte kugelförmige Dämpfungselement 20D einfach herstellbar und leicht reproduzierbar. Es weist außerdem eine gute Homogenität auf, so dass elastische homogene Eigenschaften gegeben sind. Ein aufgeschäumtes kugelförmiges Dämpfungselement 20D kann leicht in einem Arbeitsraum angeordnet werden, wobei im Betrieb in vorteilhafter Weise sichergestellt ist, dass Öffnungen, in denen ein Fluid zu- oder abfließt, durch die Kugelform des Dämpfungselementes 20D auch nach einer elastischen Verformung nicht vollständig verschlossen werden.

Die Figuren 3A bis 3C zeigen drei weitere Beispiele, die als nichtintegrierte Varianten C und D angesehen werden. Diese Beispiele sind nicht Teil der Erfindung. Die jeweilige Dämpfungsvorrichtung 30A, 30B, 30C ist als nicht in die Hochdruckpumpe integrierte Variante C in einem eigenen Dämpfergehäuse zum Anbau an einer dafür vorgesehenen Schnittstelle des Gehäuses der Hochdruckpumpe vorgesehen. Über die Schnittstelle sind Druckschwankungen im Gehäuse der Hochdruckpumpe reduzierbar (siehe Figuren 3A, 3B, 3C).
In einer anderen Variante ist die jeweilige Dämpfungsvorrichtung als nicht in die Hochdruckpumpe integrierte Variante D in einem eigenen Dämpfergehäuse zum Einbau in einer dafür vorgesehenen Schnittstelle einer Zuleitung und/oder Bypassleitung vorgesehen. Über die Schnittstelle sind Druckschwankungen der Hochdruckpumpe bereits in der Zuleitung und/oder Bypassleitung zu der Hochdruckpumpe reduzierbar (siehe Figuren 3A, 3B, 3C).
Die Figur 3A zeigt in einem schematischen Querschnitt einlagige kugelförmige Dämpfungselemente 10A gemäß Figur 1A in dem Dämpfergehäuse der Dämpfungsvorrichtung 30A. Es versteht sich, dass mindestens ein Dämpfungselement 10A in dem Dämpfergehäuse angeordnet ist, um die Dämpfungsvorrichtung 30A auszubilden.
Es versteht sich ferner, dass analog zu den Dämpfungselementen 10A gemäß Figur 1A auch mindestens ein Dämpfungselement 10B gemäß Figur 1B mit den oben genannten Vorteilen eingesetzt werden kann.
Über eine nicht näher dargestellte Schnittstelle wird das Dämpfergehäuse mit dem Gehäuse der Hochdruckpumpe verbunden, so dass das Druckschwankungen aufweisende Fluid ein- und ausströmt. Das Dämpfungselement 10A weist die oben genannten Vorteile auf, so dass die Vorteile auch für die Dämpfungsvorrichtung 30A gelten. In vorteilhafter Weise ist es durch die Verwendung einer Dämpfungsvorrichtung 30A nicht nötig, Bauraum in der Hochdruckpumpe selbst vorzuhalten. Diese Merkmale und Vorteile gelten auch für die nachfolgenden beiden Beispiele. Die Figur 3B zeigt in einem schematischen Querschnitt ein rechteckiges Dämpfungselement 20A' gemäß Figur 2A in dem Dämpfergehäuse der Dämpfungsvorrichtung 30B, jedoch mit Stegen. Die Stege bewirken, dass stets eine Beabstandung des Dämpfungselementes 20A' zu der Innenfläche des Dämpfergehäuses bewirkt wird, wodurch die der Druck von allen Seiten auf das Dämpfungselement 20A' einwirken kann. Bezüglich der Ausgestaltung des rechteckigen Dämpfungselementes 20A' und der damit verbundenen Vorteile bei Anordnung des Dämpfungselementes 20A' in dem Dämpfergehäuse der Dämpfungsvorrichtung 30B wird auf die Ausführungen des Dämpfungselementes 20A im Zusammenhang mit Figur 2A verwiesen.

Die Figur 3C zeigt in einem schematischen Querschnitt ein im Wesentlichen rechteckiges aufgeschäumtes Dämpfungselement 20D' analog zu dem aufgeschäumten kugelförmigen Dämpfungselement 20D gemäß Figur 2D in dem Dämpfergehäuse der Dämpfungsvorrichtung 30C. Die ungleichförmige wellenartige Ausgestaltung der Mantelfläche des im Wesentlichen rechteckigen aufgeschäumten Dämpfungselementes 20D' bewirkt wiederum, dass stets eine Beabstandung des Dämpfungselementes 20D zu der Innenfläche des Dämpfergehäuses bewirkt wird, wodurch die allseitige Wirkrichtung des Druckes auf das Dämpfungselement 20D' sichergestellt wird. Bezüglich der Ausgestaltung des im Wesentlichen rechteckigen aufgeschäumten Dämpfungselementes 20A und der damit verbundenen Vorteile bei Anordnung des Dämpfungselementes 20D' in dem Dämpfergehäuse der Dämpfungsvorrichtung 30C wird auf die Ausführungen zu Figur 2D verwiesen.

### Bezugszeichenliste

- 10A: kugelförmiges Dämpfungselement (einlagig)
- 10B: kugelförmiges Dämpfungselement (mehrlagig)
- 20A: rechteckiges Dämpfungselement mit geraden Mantelflächen (einlagig)
- 20A': rechteckiges Dämpfungselement mit Stegen (einlagig)
- 20B: rechteckiges Dämpfungselement mit ungeraden Mantelflächen (einlagig)
- 20C: rechteckiges Dämpfungselement mit geraden Mantelflächen (einlagig) mit einem Hohlraum
- 20D: kugelförmig aufgeschäumtes Dämpfungselement
- 20D': rechteckig aufgeschäumtes Dämpfungselement mit ungeraden Mantelflächen
- 30A: Dämpfungsvorrichtung mit Dämpfungselementen 10A
- 30B: Dämpfungsvorrichtung mit einem Dämpfungselement 20A'
- 30C: Dämpfungsvorrichtung mit einem Dämpfungselement 20D'

## Patentansprüche

1. Hochdruckpumpe enthaltend mindestens ein Dämpfungselement (10B), welches in mindestens einem Druckschwankungen aufweisenden fluiddurchströmten Bauraum der Hochdruckpumpe angeordnet ist,
**dadurch gekennzeichnet, dass**
das mindestens eine Dämpfungselement (10B) isotrope Eigenschaften aufweist, da es frei beweglich in dem mindestens einen Bauraum der Hochdruckpumpe integriert angeordnet ist, so dass Druckschwankungen, die auf das isotrope Dämpfungselement (10B) einwirken, unabhängig von der Wirkrichtung der Druckschwankungen gleichmäßig vom isotropen Dämpfungselement (10B) aufgenommen werden, wobei das mindestens eine Dämpfungselement (10B) mehrlagig ist, und die Lagen des mehrlagigen Dämpfungselementes (10B) aus nur einem Material mit unterschiedlichen Härten oder aus verschiedenen Materialien mit unterschiedlichen Härten ausgebildet ist/sind.

2. Hochdruckpumpe nach Anspruch 1, **dadurch gekennzeichnet, dass** der mindestens eine in der Hochdruckpumpe integrierte Bauraum ein Arbeitsraum der Hochdruckpumpe ist.

3. Hochdruckpumpe nach Anspruch 2, **dadurch gekennzeichnet, dass** der mindestens eine in die Hochdruckpumpe integrierte Arbeitsraum ein Druckausgleichsraum oder ein Triebwerksraum ist.

4. Hochdruckpumpe nach Anspruch 1, **dadurch gekennzeichnet, dass** das Dämpfungselement (10B) aus einem elastischen Material ausgebildet ist und auf Druckbeanspruchung mit einer vorgebbaren reversiblen Volumenänderung reagiert.

5. Hochdruckpumpe nach Anspruch 4, **dadurch gekennzeichnet, dass** das Dämpfungselement (10B) als elastisches Material aus
• einem Elastomer oder einem aufgeschäumten Elastomer oder
• einem thermoplastischen Elastomer oder einem aufgeschäumten thermoplastischen Elastomer ausgebildet ist,
wobei zumindest das mit dem Fluid in Berührung kommende Material gegenüber Schmierstoff und/oder Benzin und/oder Dieselkraftstoff resistent ist.

6. Hochdruckpumpe nach Anspruch 1 und 5, **dadurch gekennzeichnet, dass** das Dämpfungselement (10B) aus mindestens einem Material ausgebildet ist, welches gegenüber der chemischen Zusammensetzung des Fluids, insbesondere gegenüber Schmier- und/oder Kraftstoffen resistent ist.

7. Hochdruckpumpe nach Anspruch 1 und 5, **dadurch gekennzeichnet, dass** das mehrlagige Dämpfungselement (10B) beschichtet ist, wobei das mit dem Fluid in Berührung kommende Material der Beschichtung gegenüber Schmierstoff und/oder Benzin und/oder Dieselkraftstoff resistent ist.

8. Kraftstoffversorgungssystem eines Kraftfahrzeugs mit einer Hochdruckpumpe nach Anspruch 1.

## Claims

1. High-pressure pump containing at least one damping element (10B) which is arranged in at least one installation space, flowed through by fluid and having pressure fluctuations, of the high-pressure pump,
**characterized in that**
the at least one damping element (10B) has isotropic properties since it is arranged integrated in the at least one installation space of the high-pressure pump so as to be able to move freely, so that pressure fluctuations acting on the isotropic damping element (10B) can be absorbed evenly by the isotropic damping element (10B) irrespective of the direction of action of the pressure fluctuations, wherein the at least one damping element (10B) is multi-layered, and the layers of the multi-layered damping element (10B) is/are formed of just one material with different hardnesses, or of different materials with different hardnesses.

2. High-pressure pump according to Claim 1,
**characterized in that** the installation space integrated into the high-pressure pump is a working space of the high-pressure pump.

3. High-pressure pump according to Claim 2,
**characterized in that** the at least one working space integrated into the high-pressure pump is a pressure-equalizing space or a drive unit space.

4. High-pressure pump according to Claim 1,
**characterized in that** the damping element (10B) is made of an elastic material and reacts to pressure loading with a predictable, reversible change in volume.

5. High-pressure pump according to Claim 4, **characterized in that** the damping element (10B) is made of elastic material consisting of
• an elastomer or a foamed elastomer, or
• a thermoplastic elastomer or a foamed thermoplastic elastomer,
wherein at least the material coming into contact with the fluid is resistant to lubricant and/or gasoline and/or diesel fuel.

6. High-pressure pump according to Claims 1 and 5,
**characterized in that** the damping element (10B) is made of at least one material which is resistant to the chemical composition of the fluid, in particular to lubricants and/or fuels.

7. High-pressure pump according to Claims 1 and 5,
**characterized in that** the multi-layered damping element (10B) is coated, wherein the material of the coating coming into contact with the fluid is resistant to lubricant and/or gasoline and/or diesel fuel.

8. Fuel supply system for a motor vehicle, having a high-pressure pump according to Claim 1.

## Revendications

1. Pompe à haute pression contenant au moins un élément d'amortissement (10B), qui est disposé dans au moins un espace structurel de la pompe à haute pression parcouru par un fluide et soumis à des variations de pression,
**caractérisée en ce que**
l'au moins un élément d'amortissement (10B) présente des propriétés isotropes car il est disposé sous forme intégrée de manière librement mobile dans l'au moins un espace structurel de la pompe à haute pression de telle sorte que des variations de pression qui agissent sur l'élément d'amortissement isotrope (10B) soient reçues indépendamment de la direction d'action des variations de pression de manière uniforme par l'élément d'amortissement isotrope (10B), l'au moins un élément d'amortissement (10B) étant multicouches et les couches de l'élément d'amortissement multicouche (10B) étant réalisées à partir de seulement un matériau ayant des duretés différentes ou à partir de plusieurs matériaux ayant des duretés différentes.

2. Pompe à haute pression selon la revendication 1,
**caractérisée en ce que** l'au moins un espace structurel intégré dans la pompe à haute pression est un espace de travail de la pompe à haute pression.

3. Pompe à haute pression selon la revendication 2,
**caractérisée en ce que** l'au moins un espace de travail intégré dans la pompe à haute pression est un espace d'équilibrage de pression ou un local de machine.

4. Pompe à haute pression selon la revendication 1,
**caractérisée en ce que** l'élément d'amortissement (10B) est réalisé à partir d'un matériau élastique et réagit à une sollicitation en pression avec une variation de volume réversible prédéfinissable.

5. Pompe à haute pression selon la revendication 4, **caractérisée en ce que** l'élément d'amortissement (10B) est réalisé sous forme de matériau élastique constitué
- d'un élastomère ou d'un élastomère moussé ou
- d'un élastomère thermoplastique ou d'un élastomère thermoplastique moussé,
au moins le matériau venant en contact avec le fluide étant résistant aux lubrifiants et/ou à l'essence et/ou au carburant diesel.

6. Pompe à haute pression selon les revendications 1 et 5, **caractérisée en ce que** l'élément d'amortissement (10B) est réalisé à partir d'au moins un matériau qui est résistant vis-à-vis de la composition chimique du fluide, en particulier vis-à-vis des lubrifiants et/ou des carburants.

7. Pompe à haute pression selon les revendications 1 et 5, **caractérisée en ce que** l'élément d'amortissement multicouche (10B) est revêtu, le matériau du revêtement venant en contact avec le fluide étant résistant aux lubrifiants et/ou à l'essence et/ou au carburant diesel.

8. Système d'alimentation en carburant d'un véhicule automobile comprenant une pompe à haute pression selon la revendication 1.
